Europäisches Patentamt

(19) European Patent Office  (11) Publication number: **0 289 123**
Office européen des brevets  **B1**

(12) **EUROPEAN PATENT SPECIFICATION**

(45) Date of publication of the patent specification: (51) Int. Cl.⁵: **F16B 1/00, G09F 7/08**
20.06.90

(21) Application number: 88302338.4

(22) Date of filing: 17.03.88

(54) **Mounting device.**

(30) Priority: 27.04.87 GB 8709880
08.12.87 GB 8728655

(43) Date of publication of application:
02.11.88 Bulletin 88/44

(45) Publication of the grant of the patent:
20.06.90 Bulletin 90/25

(84) Designated Contracting States:
DE FR NL

(56) References cited:
DE-A- 2 215 707
DE-A- 2 232 737
DE-A- 2 232 788
GB-A- 2 011 524
GB-B- 1 416 734
US-A- 3 494 646

(73) Proprietor: SIGNFIX LIMITED, Pear Tree Works Bath
Road Upper Langford, Bristol, BS18 7DJ(GB)

(72) Inventor: Gibbins, Roger Nevil, Court Cottage Ladywell,
Wrington,Avon(GB)

(74) Representative: Armitage, Ian Michael et al, MEWBURN
ELLIS & CO. 2/3 Cursitor Street, London EC4A 1BQ(GB)

## Description

This invention relates to a device used in conjunction with a channel member for fixing one body to another, for example for fixing a sign to a supporting post.

Mounting devices are well known for mounting signs on posts, or other supports. Usually, one or more restricted mouth channel members are provided on the rear surface of the sign panel and the sign is then mounted on its support by means of straps which pass round the support and whose ends are secured to respective channels, for example by means of bolts whose heads are located in the channel and which project through apertures in the ends of the straps and are secured by nuts. One end of the strap may be attached to the channel in this fashion, while the other has a T-formation which retains it in the channel. Current designs of mounting strap are generally manufactured suitably for fixing large, heavy signs. However, many signs are relatively small and therefore a simplified way of attaching these straps to the channel member would seem appropriate. It is also desirable that the strap itself should be cheap and easy to manufacture.

According to one respect of the present invention, the State of the Art of which 19 represented by GB-B 1 416 734, there is provided a connecting member for use in mounting a channel member on a support, in which the channel member has a mouth restricted by inturned lips, connecting member comprising a T-shaped end portion formed from sheet metal, the T-shaped comprising a transverse body and a narrow neck, the body thereby having shoulders on either side of the neck so that when the body of the connecting member is located within and transverse to the channel member the shoulders engage behind the lips of the channel member, and the neck projects from the channel mouth, the two shoulders being provided with elements which extend from the body out of the plane of the connecting member, in the same or mutually opposed directions thereby providing projections for bearing against the inturned lips of the channel member.

Preferably, each of the inturned lips has a rib projecting into the channel, and the shoulders of the T-shape will be designed to engage the lips behind the ribs so as to resist the mouth of the channel being forced open.

Preferably, the extension of said elements is less than the width of the channel mouth, so that the T-shaped end portion can be inserted through the channel mouth with the plane of the T lengthwise of the channel, and then rotated so that the body of the T lies transversely to the channel and engages under the lips of the channel.

In order that the invention may be more clearly understood, four embodiments will now be described, by way of example, with reference to the accompanying drawings of which:

Fig. 1 shows a perspective view of the T-shaped end portion of a first embodiment of the strap and a part of a channel;

Fig. 2 shows a perspective view of the T-shaped end portion of a second embodiment of the strap;

Fig. 3 shows a perspective view of the T-shaped end portion of a third embodiment of the strap;

Fig. 4 shows a fourth embodiment of the strap;

Fig. 5 is a view along a second embodiment of a channel showing the engagement of the strap in Fig. 4 with the channel; and

Figs. 6-8 show end views of the channel as a connecting member in the third embodiment is inserted and rotated into position

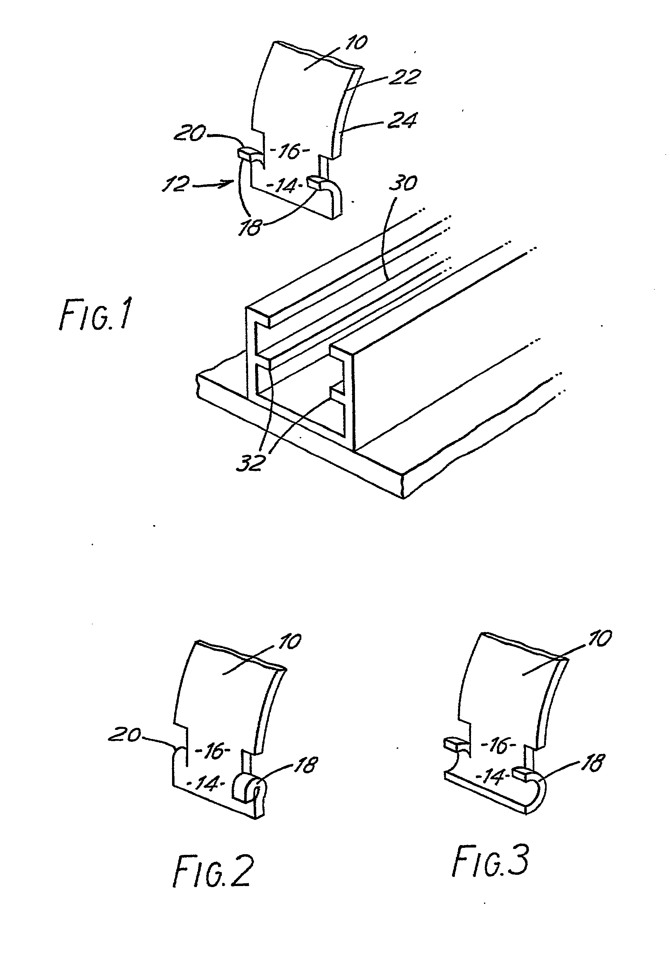

Referring to Fig. 1, the strap 10 is made from sheet steel and is integral at one end with a T-shaped connecting member 12. The T-shaped connecting member 12 comprises a body 14, attached to the strap 10, through a narrower neck 16. The shoulders 18 of the body adjacent the neck are partially cut away from the remainder of the connecting member 12, along lines substantially parallel to the neck 16 and are bent in the same direction out of the plane of the connecting member so as to form two short lateral projections 20. These shoulders bear on the inturned lips of the channel member as will be described below.

Fig. 2 shows the second embodiment which is the same as the first except that the shoulders 18 are bent in opposite directions out of the plane of the connecting member, and further, they are bent through 180° rather than the approximately 90° bend of Fig. 1. The embodiment of Fig. 1 could be modified by either of these features separately.

Fig. 3 shows the third embodiment which is the same as the first where the shoulders 18 are bend in the same direction out of the plane of the connecting members except that the body 14 is swaged to give the lower edge portion a curved profile, this acting as a means of structurally strengthening the T-shaped connecting member.

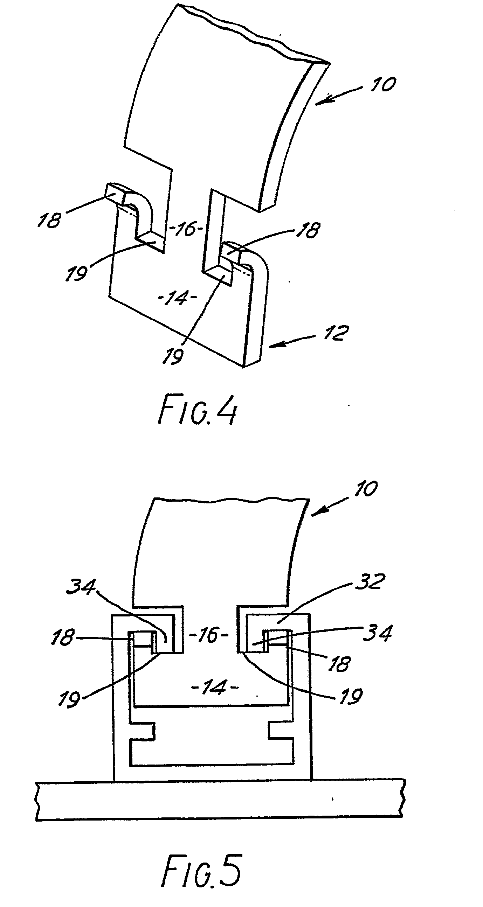

The embodiment shown in Fig. 4 differs slightly from the three embodiments described above, because it is designed to engage with a modified channel member. However, in this embodiment the shoulders 18 are made by cutting two rectangles out of the strap, so that there is a gap 19 between each shoulder 18 and the neck 16. The shoulders 18 may be bent into any of the positions described in embodiments 1 to 3. Referring to Fig. 5 the T-shaped member 12 engages a channel 30 similar to that of Figs. 1 to 3, but having ribs 34 which project from the lips 32 into the channel 30. The shoulders 18 bear against the inturned lips 32 behind the ribs 34. This arrangement prevents the mouth of the channel 30 being forced open, and thus the strap 10 from disengaging the channel.

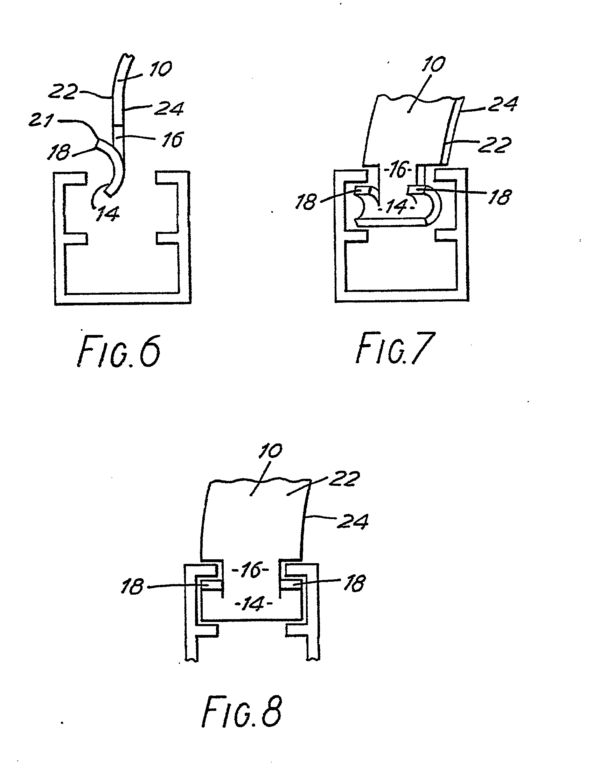

Referring to Figs. 6-8 the end of the strap is secured to a channel member 30 by inserting the body 14 and shoulders 18 of the T end through the restricted mouth of the channel member 30, with the body oriented lengthwise of the channel, as shown in Fig. 4. Once the body and shoulders are located inside the channel the connecting member and strap can be turned (Fig. 5) so that the body lies transversely across the channel and is retained since the shoulders of the body are located under inturned lips 32 restricting the channel mouth as in Fig. 6 Therefore, the overall width of the body must be greater than the width of the channel mouth but less than the width of the channel itself.

The flat upper surfaces 20 of the shoulders engage under the channel lips, thereby providing a better bearing surface than the thin edge of the sheet material. The other end (not shown) of the strap can be connected to the channel in conventional manner, for example by means of a nut and bolt. As shown in Fig. 6 initially the shoulders 18 may be bent through an angle less than 90° rather than the approximate 90° bend occurring in the first embodiment. When the end of the strap in this form is inserted into the channel member a corner 21 of each shoulder 18 initially engages the lips of the channel member. As the strap is tightened these corners create indentations in the material of the channel member, thereby locking them against slipping lengthwise in the channel. On further tightening, the shoulders are bent to an angle approaching the 90° of the first embodiment, so that as well as being locked in position the shoulders provide substantial bearing surfaces engaging the channel lips.

The embodiments illustrate a connecting member hereof integrally formed in the end of a strap. This is economically advantageous in most cases, but the neck 16 could alternatively terminate in a head adapted, e.g. by a slot, for connection to a separate strap.

## Claims

1. A connecting member (10) for use in mounting a channel member on a support, in which the channel member has a mouth restricted by inturned lips (32), connecting member (10) comprising a T-shaped end portion (12) formed from sheet metal, the T-shape comprising a transverse body (14) and a narrow neck (16), the body thereby having shoulders on either side of the neck (16) so that when the body of the connecting member is located within the transverse to the channel member the shoulders engage behind the lips (32) of the channel member, and the neck (16) projects from the channel mouth, characterised in that the two shoulders are provided with elements (18) which extend from the body out of the plane of the connecting member, in the same or mutually opposed directions thereby providing projections for bearing against the inturned lips (32) of the channel member.

2. A connecting member (10) according to claim 1 wherein the elements (18) extend along the surface of the body (14) in a direction generally parallel to the plane of the neck (16).

3. A connecting member according to claim 1 wherein the elements (18) extend in a direction substantially perpendicular to the plane of the neck (16).

4. A connecting member according to claim 1 wherein the elements (18) are initially bent out of the plane of the neck by less than 90°, so that the shoulders bear edgewise but at a slant against the channel lips and are deformed further out of the plane of the neck as the connecting member is tightened in the channel.

5. A connecting member according to any of the preceding claims wherein both elements (18) extend in the same direction from the plane of the neck.

6. A connecting member according to any of the preceding claims, wherein the head part (14) is curved about an axis perpendicular to the direction of extension of the neck (16).

7. A connecting member according to any of the preceding claims, adapted to engage a channel member having inturned lips (32) provided with ribs (34) which project into the channel (30), by having the elements (18) spaced from the neck (16) so as to bear against the lips (32) with each rib (34) projecting between an element (18) and the neck (16).

8. A connecting member according to any one of the preceding claims, wherein the neck is integral with a strap for attachment to the support.

9. A channel member mounted on a support by means of one or more connecting members of any one of the preceding claims.

10. A mounted channel according to claim 9 wherein the distance of extension of the elements (18) perpendicular to the plane of the neck (16) is smaller than the width of the channel mouth.

## Patentansprüche

1. Verbindungsteil (10) zur Verwendung bei der Montage eines Profilteils auf einem Support, wobei das Profilteil eine durch nach innen gekehrte Lippen (32) begrenzte Mündung hat, wobei das Verbindungsteil (10) einen aus Metallblech gebildeten T-förmigen Endbereich (12) umfaßt, wobei die T-Form einen Querkörper (14) und einen schmalen Hals (16) umfaßt, wodurch der Körper auf jeder Seite des Halses (16) Schultern hat, so daß, wenn der Körper des Verbindungsteils querlliegend angeordnet ist, die Schultern mit der Rückseite der Lippen (32) des Profilteils in Eingriff stehen und der Hals (16) von der Profilmündung vorsteht, dadurch gekennzeichnet, daß die zwei Schultern mit Elementen (18) versehen sind, die sich von dem Körper aus der Ebene des Verbindungsteils heraus in der gleichen oder in entgegengesetzten Richtungen erstrecken, wodurch Vorsprünge zur Anlage an den nach innen gekehrten Lippen (32) des Verbindungsteils gebildet sind.

2. Verbindungsteil nach Anspruch 1, wobei sich die Elemente (18) längs der Oberfläche des Körpers (14) in einer zur Ebene des Halses (16) im allgemeinen parallelen Richtung erstrecken.

3. Verbindungsteil nach Anspruch 1, wobei sich die Elemente (18) in einer zur Ebene des Halses (16) im wesentlichen rechtwinkligen Richtung erstrecken.

4. Verbindungsteil nach Anspruch 1, wobei die Elemente (18) anfänglich aus der Ebene des Halses um weniger als 90° herausgebogen sind, so daß die Schultern mit ihren Kanten, aber schiefwinklig an den Profilrinnenlippen anliegen und weiter aus der Ebene des Halses heraus verformt werden, wenn das Verbindungsteil in der Profilrinne festgelegt wird.

5. Verbindungsteil nach einem der vorhergehenden Ansprüche, wobei sich beide Elemente (18) von der Ebene des Halses in der gleichen Richtung erstrecken.

6. Verbindungsteil nach einem der vorhergehenden Ansprüche, wobei das Kopfteil (14) um eine zur Längsachse des Halses (16) rechtwinklige Achse gewölbt ist.

7. Verbindungsteil nach einem der vorhergehenden Ansprüche, das mit einem Profilteil in Eingriff bringbar ist, das nach innen gekehrte Lippen (32) aufweist, die mit in die Profilrinne (30) hineinragenden Rippen (34) versehen sind, indem die Elemente (18) im Abstand von dem Hals (16) angeordnet sind, so daß sie an den Lippen (32) anliegen, wobei jede Rippe (34) zwischen ein Element (18) und den Hals (16) hineinragt.

8. Verbindungsteil nach einem der vorhergehenden Ansprüche, wobei der Hals mit einem Streifen zur Befestigung an dem Support einstückig ausgebildet ist.

9. Profilteil, das an einem Support mittels eines oder mehrerer Verbindungsteile nach einem der vorhergehenden Ansprüche befestigt ist.

10. Befestigtes Profilteil nach Anspruch 9, wobei der Abstand der Verlängerung der Elemente (18) rechtwinklig zur Ebene des Halses (16) kleiner ist als die Breite der Profilrinnenmündung.

**Revendications**

1. Organe de connexion (10) à utiliser pour monter une gorge sur un support, où la gorge a une embouchure restreinte par des lèvres (32) retournées vers l'intérieur, un organe de connexion (10) comprenant une portion extrême (12) en forme de T qui est formée d'une tôle métallique, la forme de T comprenant un corps transversal (14) et un col étroit (16), le corps ayant ainsi des épaulements de chaque côté du col (16) de manière que lorsque le corps de l'organe de connexion est placé dans et transversalement à la gorge, les épaulements viennent en engagement derrière les lèvres (32) de la gorge et le col (16) dépasse de l'embouchure de la gorge, caractérisé en ce que les deux épaulements sont pourvus d'éléments (18) qui s'étendent du corps, hors du plan de l'organe de connexion, dans des directions identiques ou mutuellement opposées pour ainsi former des protubérances pour un appui contre les lèvres (32) de la gorge qui sont retournées vers l'intérieur.

2. Organe de connexion selon la revendication 1 où les éléments (18) s'étendent le long de la surface du corps (14) dans une direction généralement parallèle au plan du col (16).

3. Organe de connexion selon la revendication 1 où les éléments (18) s'étendent dans une direction sensiblement perpendiculaire au plan du col (16).

4. Organe de connexion selon la revendication 1 où les éléments (18) sont initialement courbés hors du plan du col, sur moins de 90°, de manière que les épaulements portent, par leurs bords mais avec obliclté, contre les lèvres de la gorge et soient encore déformés hors du plan du col tandis que l'organe de connexion est serré dans la gorge.

5. Organe de connexion selon l'une quelconque des revendications précédentes où les deux éléments (18) s'étendent dans la même direction à partir du plan du col.

6. Organe de connexion selon l'une quelconque des revendications précédentes où la partie de tête (14) est courbée autour d'un axe perpendiculaire à la direction d'extension du col (16).

7. Organe de connexion selon l'une quelconque des revendications précédentes, adapté à engager une gorge ayant des lèvres (32) tournées vers l'intérieur pourvues de nervures (34) qui dépassent dans la gorge (30), en ayant les éléments (18) espacés du col (16) afin de porter contre les lèvres (32) avec chaque nervure (34) dépassant entre un élément (18) et le col (16).

8. Organe de connexion selon l'une quelconque des revendications précédentes, où le col fait corps avec une sangle pour fixation au support.

9. Gorge montée sur un support au moyen d'un ou plusieurs organes de connexion selon l'une quelconque des revendications précédentes.

10. Gorge montée selon la revendication 9 où la distance d'extension des éléments (18) perpendiculaires au plan du col (16) est plus petite que la largeur de l'embouchure de la gorge.

FIG.1

FIG.2

FIG.3

FIG.4

FIG.5

FIG.6

FIG.7

FIG.8